# EUROPEAN PATENT SPECIFICATION

(11) **EP 1 777 030 B1**
(45) Date of publication and mention of the grant of the patent: **05.08.2009**
(21) Application number: 06254276.6
(22) Date of filing: 15.08.2006
(51) Int. Cl.: B23K 26/14, B21D 26/06

(54) **Laser thermal forming systems with active cooling**
Vorrichtung zum Laserumformen mit aktiver Kühlung
Système de formage thermique au laser avec refroidissement actif

(30) Priority: 18.10.2005 US 253150
(43) Date of publication of application: 25.04.2007
(73) Proprietor: GENERAL ELECTRIC COMPANY, Schenectady, NY 12345 (US)
(72) Inventor: Zhang, Wenwu, Schenectady, New York 12309 (US); Jones, Marshall Gordon, Scotia New York 12302 (US); Graham, Michael Evans, Slingerlands, New York 12159 (US)
(74) Representative: Bedford, Grant Richard

(56) References cited:
- DE-A1- 19 708 047
- GB-A- 2 064 399
- HENNIGE THOMAS D; GEIGER M: "Cooling effects in laser forming" TECHNICAL PAPER - SOCIETY OF MANUFACTURING ENGINEERS, no. MF99-132, 1999, pages 1-6, XP009078639

## Description

The present disclosure generally relates to thermal forming processes, and, more specifically, to thermal forming systems and active cooling processes adapted to simultaneously form a liquid curtain about a gas channel, wherein thermal energy produced by the thermal forming system propagates through the gas channel and onto the workpiece to be formed.

Thermal forming is a process that uses energy as a thermal source to permanently deform a target without hard tooling. The localized heating caused by the thermal source will typically not exceed the melting temperature of the parent material of the target but is sufficiently hot to effect local thermal deformation. Thermal energy is typically scanned across the target surface and the resulting localized thermal stress in the target induces a permanent deformation to the target after cooling down. On exemplary thermal forming system employs lasers to generate the thermal energy. The basic mechanisms and physical phenomena of laser forming processes have been detailed in the literature, see generally, Vollertsen, F., 1994, "Mechanism and Models for Laser Forming," Laser Assisted Net Shape Engineering, Proceedings of the LANE'94, Vol. 1, pp. 345-360. In general, laser thermal forming can be used to treat/form a variety of materials, including metals, silicon, ceramics, and the like. The benefit of cooling the workpiece during laser forming has been established; see T.D. Hennige and M. Geiger, "Cooling effects in laser forming", society of Manufacturing Engineers, 1999.

Multiple scans are generally employed and considered beneficial for several reasons. One primary reason is to provide a larger bending angle than that can be obtained from a single scan. Another reason for multiple scans is to bring the geometry gradually to the desired geometry, which also permits the creation of complex deformations as well as minimizes damage to the target material. During multiple scan process, it is generally desirable to wait until the workpiece cools down from a previous scan before applying the next scan. If the thermal energy provided by a subsequent scan is applied when the target is still relatively hot, surface absorption as well as material mechanical properties, among others, will be affected and can result in very different properties from that of a target suitably cooled between scans. Moreover, if thermal energy is applied when the target is still relatively hot the process is difficult to control, and the target material may become damaged. Still further, it has been found that during a series of scans over the same path without sufficient cooling down between multiple scans, the size of the bending angles will typically decrease with each subsequent scan. Thus, for reasons of process control it is desirable to cool the workpiece to some known temperature before each subsequent scan.

Ambient cooling of the target between scans is relatively slow compared to the scanning time. To shorten the cycle time, active cooling processes have been used. For example, one such active cooling process directs a stream of inert gas toward the heated region to enhance contraction during thermal forming. Other active cooling processes include placing the entire thermal forming system and workpiece into a controlled atmosphere environment, similar to a glove box, which requires a large volume of inert gas and significantly increases the cost and footprint of the forming system. Still other active cooling processes employ immersing or spraying the part to be cooled with a suitable liquid. However, in all of these prior art active cooling processes oxidation can occur, which can cause the part exposed to the thermal forming process to degrade, thereby lowering the fatigue life. In addition, oxidation can change the amount of coupling between the thermal energy and the target part, leading to difficulties in predicting the bending angles. Moreover, it is noted that active cooling processes employing gas cooling are not as efficient as liquid cooling. However, liquid cooling during thermal forming can interfere with thermal energy deposition. For example, bubble formation can occur as a result of a liquid to gas phase change due to the elevated temperatures of the workpiece produced by the thermal energy deposition.

GB-A-2 064 399 discloses a laser beam cutting device with active cooling in the immediate area of the focal spot of the laser beam to reduce the heating-up zone and improve accuracy and surface finish of the cut edge.

Accordingly, it is desired to provide an improved active cooling process that is not prone to oxidation and can shorten the cycle times between subsequent scans without interfering with laser energy deposition onto the workpiece.

Disclosed herein are thermal forming system and processes for actively cooling a workpiece during thermal forming. In one embodiment, the thermal forming system comprises a liquid source, a gas source, a thermal source adapted to locally discharge thermal energy onto a workpiece, and a nozzle coupled to the thermal source, the nozzle comprising an inner annular member and an outer annular member defining first and second fluid passageways, wherein the second fluid passageway is concentric to the first fluid passageway, wherein the first fluid passageway is in fluid communication with the gas source, wherein the second fluid passageway is in fluid communication with the liquid source, and wherein the locally discharged thermal energy is coaxial with the first fluid passageway. Each annular member is defined by sidewalls converging between a respective point of attachment of the gas source and the liquid source and a respective outlet opening and each annular member further includes a straight channel portion respectively extending from the converging sidewalls to define the respective outlet opening to provide a stable gas channel and liquid curtain during laser forming resulting in a controlled atmosphere and efficient cooling.

In various embodiments a process for forming a workpiece comprises A process for forming a workpiece, the process comprising applying thermal energy locally to a surface of the workpiece; and simultaneously discharging a gas and a liquid at the workpiece to form a gas channel about the locally applied thermal energy and a liquid curtain about the gas channel. The step of simultaneously discharging the gas and the liquid comprises allowing the fluid to flow from respective points of attachment of the gas source and the liquid source in converging channels defined by sidewalls of each annular member to a respective outlet opening through a respective straight channel portion extending from the converging sidewalls to define the respective outlet opening so as to provide a stable gas channel and liquid curtain during laser forming resulting in a controlled atmosphere and efficient cooling.

The disclosure may be understood more readily by reference to the following detailed description of the various features of the disclosure and the examples included therein, with reference to the accompanying drawings, in which:
Figure 1 schematically illustrates a thermal forming system;
Figure 2 is schematically illustrates a nozzle suitable for use with the thermal forming system of Figure 1 in accordance with the invention;
Figure 3 is a bottom plan view of the nozzle taken along lines 3-3 of Figure 2; and
Figure 4 schematically illustrates a thermal forming system in accordance with a comparative example.

Thermal forming systems and processes for actively cooling a workpiece during thermal forming generally includes adapting a thermal forming system to simultaneously form a liquid curtain about a gas channel, wherein a thermal energy produced by the thermal forming system propagates through the gas channel and onto the workpiece. Simultaneous with the thermal exposure of the workpiece to the thermal energy, the liquid curtain provides rapid cooling. In this manner, phase change and convective heat transfer of the liquid can be used simultaneously with a gas flow to provide effective cooling, thereby reducing cycle time between scans. The gas flow that defines the gas channel can provide an inert atmosphere as dictated by end user's choice in gases. As such, the prior art problems with bubble formation caused by contact of the heated workpiece with the liquid are avoided, thereby preventing thermal energy distortion that can result.

For convenience, reference will now be made to laser thermal forming systems that provide a laser energy beam for localized heating of the workpiece. However, it should be apparent to those of skill in the art that the processes and laser thermal forming systems described in greater detail below can be readily applied to other types of thermal forming system. For example, plasma systems, induction systems, e-beam systems, arc-light systems, resistance heating systems, flame-based systems, and the like can be modified in the manner described below with respect to the laser forming systems to obtain similar advantages.

In the discussion that follows, the laser may have any conventional configuration with suitable power for emitting the laser energy beam for locally heating the intended workpiece to a desired elevated temperature. Preferably, the laser energy beam is effective for locally heating the workpiece below the melting temperature of the workpiece but sufficiently high for causing local thermal deformation thereof for the intended laser forming process. Likewise, the type of laser for providing the laser energy beam is not intended to be limited. For example, the laser can be a continuous wave (CW) neodymium (Nd):yttrium-aluminum-garnet (YAG) laser having a wavelength of 1060 nm, an ultraviolet wavelength laser, an infrared wavelength laser, or visible wavelength laser.

The laser energy beam spot size on the workpiece surface is generally considered a critical parameter in laser forming. To get rid of the bubble problem and to avoid laser beam distortion during laser forming, the laser energy beam preferably propagates in the medium provided by the gas flow to the workpiece after exiting the laser system; this concept is also referred to herein as direct energy deposition. To achieve oxidation protection, an inert gas can be used.

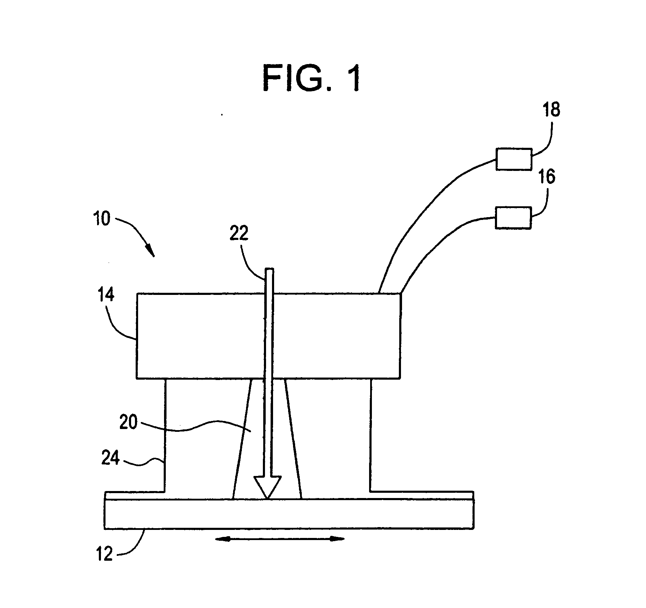

Referring now to Figure 1, there is shown an exemplary laser forming system generally designated by reference numeral 10 for thermally forming a workpiece 12. The optical components of the laser forming system are not intended to be limited to any particular type or configuration. The laser forming system 10 generally includes a motion system for scanning the workpiece, examples of which can include a numerically controlled (NC) system, a motorized stage and a robot system. The system 10 also includes a controller, which can be in the form of a digitally programmable computer that may be configured in suitable software for precisely controlling the three dimensional movement of the stage.

The system 10 includes a nozzle 14 in operative communication with a liquid source 16 and a gas source 18 as will be described in greater detail below. The nozzle 14 provides a conduit for a laser energy beam 22 emitted from the laser generating components of the laser forming system 10 and onto selected regions of the workpiece 12. The gas source 18 is operative with the nozzle to provide a gas channel 20 that is coaxial to the emitted laser energy beam 20. Simultaneously, liquid from the liquid source 16 flows through the nozzle 14 to provide a liquid curtain 24 about the laser energy beam 16 and gas channel 20. To provide the gas channel 20, the gas source preferably flows through the nozzle at a rate and pressure effective to define the gas channel 20 within the higher density exterior liquid defining the liquid curtain 24.

Suitable gases will depend on the desired application. For substrates sensitive to oxidation, an inert gas can be provided to effectively minimize oxidation and/or prevent contact of an oxidizer with the workpiece during laser forming. Suitable gases include, but are not intended to be limited to, argon, nitrogen, neon, carbon dioxide, carbon monoxide, cryogenic gases and the like, as well as mixtures thereof. Other gases suitable to prevent oxidation will be apparent to those skilled in the art. In other embodiments, oxidizing gases such as air or the like could be used in the event that the workpiece being formed is insensitive to oxidation or it is desired to impart certain properties to the target region of the workpiece 12. The particular gas or gases chosen should be selected to be non-reactive with the workpiece at the thermal forming temperatures employed or, if desired, the gas or gases can be chosen to be reactive if desired for the particular application. For safety reasons, the selected gas or gas mixture should be non-combustible.

The liquid is preferably selected to have a higher density than the particular gas selected. Suitable liquids include water, cryogenic liquids, and the like that are generally non-reactive with the workpiece and the gases employed to provide the gas channel. In some embodiments, the liquid will be selected to be non-oxidizing under the laser forming conditions employed. The viscosity of the liquid can be changed to make the liquid flow (i.e., liquid curtain) stable. Similarly, the liquid composition can be modified so that any deleterious effects on the workpiece during laser thermal forming are effectively prevented. For example, the liquid can include rust protection/prevention additives, reducing agents, and the like. In other embodiments, the liquid can comprise a mixture of liquid and gas provided that the liquid forms a liquid curtain during operation thereof. This constrained environment is commercially valuable for high quality laser forming since an incomplete liquid curtain can result in oxidation. Advantageously, the laser forming system 10 as described herein provides a high cooling rate, direct laser energy deposition onto the workpiece to be formed, and a controlled atmosphere.

The nozzle 14 is adapted to move relative to the workpiece 12 such that as the laser energy beam 22 thermally heats the selected region of the workpiece, the workpiece temperature can be rapidly lowered to a temperature of the liquid that defines the liquid curtain 24 as the nozzle moves relative to the workpiece (or as the workpiece moves relative to the nozzle as may be the case for certain laser forming systems). This significantly reduces the cycle times in multi-scan laser forming processes. For example, without employing the gas channel and liquid curtain as described herein, a laser forming system utilizing gas only or liquid only required a cooling time of a over 10 seconds between each scan. Under the same conditions, a laser forming system with the simultaneous gas channel and liquid curtain required a cooling time close to 0 seconds between each subsequent scan. Thus, the cycle times in laser forming process that employ the simultaneous flow of gas and liquid as described herein are greatly reduced. Moreover, it has been found that if every scan starts from the same temperature, the consistency in temperature reduction and required cooling times is increased relative to active cooling processes that apply only liquid flow or only gas flow to effect cooling between scans.

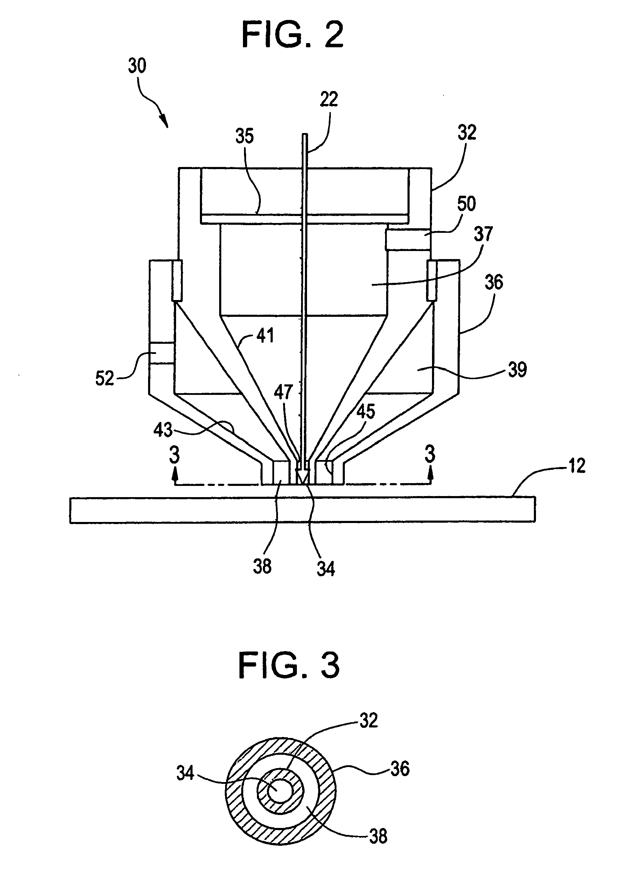

Figures 2 and 3 illustrate a nozzle 30 in accordance with one embodiment of the present disclosure suitable for use in the laser forming system 10. Generally, the nozzle 30 uses two concentric openings for defining the gas and liquid channels 20, 24, respectively, which were previously shown in Figure 1. The nozzle 30 includes an inner annular member 32 having an outlet opening 34 and an outer annular member having outlet opening 38. The inner annular member 32 is attached directly to the laser forming component, e.g., friction fitted, threaded, bolted, welded, or the like, and is positioned such that the outlet opening 34 is coaxial to the laser energy beam 22 emitted by the laser generating components of the system 10. Preferably, the interior diameter throughout the inner annular member 32 is such that the laser energy beam 22 is unimpeded as it propagates through the nozzle.

The laser energy beam 22 is shown as an arrow in the figures, but it may be of any profile as is typically employed in laser forming systems. Likewise, the outlet openings defined by the annular members can be adapted to accommodate the laser energy beam profile. For example, the outlet openings 34, 38 can have a rectangular shape to fit the laser energy beam emitted from direct-diode lasers.

An optional plate 35, optically transparent to the wavelengths of the emitted laser energy beam 22, is intermediate the laser generating component and an interior region 37 of the inner annular member 32. The plate 35 may be formed of a thin transparent quartz window pane of about 0.5 mm thickness. The plate is preferably fabricated from a material that has a low coefficient of thermal expansion and can tolerate the high thermal stresses due to the heat energy in the laser energy beam being transmitted therethrough. If desired, the quartz window may be coated with a suitable antireflection coating to substantially decrease laser heating of the quartz window itself and further decrease the possibility of undesirable window cracking during use.

An outer annular member 36 is mounted to the inner annular member 32 and includes outlet opening 38, which is concentric to outlet opening 34. The outer annular member 36 can be mounted by any means including, but not limited to, friction fitting, threads, bolts, welds, and the like. An interior region 39 is formed between the inner and outer annular members 32, 36, respectively.

The inner annular member 32 further includes at least one inlet 50 in fluid communication with the gas source 16 (shown in Figure 1) whereas the outer annular member 36 further includes at least one inlet 52 in fluid communication with the liquid source 18 (shown in Figure 1). In this manner, during operation of the laser forming system 10 the laser energy beam 22 can be maintained within the gas channel and a liquid curtain can be formed about the gas channel.

In operation, the gas and liquid channels are formed simultaneously. That is, a gas from the gas source 16 flows into the inlet opening 50 to the interior region 37 and exits outlet opening 34. Simultaneously with the gas flow, a liquid from the liquid source 18 is fed to the inlet opening 52 to interior region 39 and exits outlet opening 38. The gas and liquid flows are at a rate and pressure effective to form the gas channel and the liquid curtain. It should be noted that the gas source 16 can be operated for channeling the gas through the interior region 37 for initially purging any air contained therein after initial assembly of the nozzle.

According to the invention, each annular member 32, 36 is defined by converging sidewalls 41, 43 from about its respective point of attachment (i.e., the laser generating component or the inner annular member) to its respective outlet opening 34, 38. Each annular member 32, 36 further includes a straight channel portion 45, 47, respectively, extending from the converging sidewalls 41, 43 to define the particular outlet opening 34, 38. In this manner, stable and relatively smooth gas and liquid flows are obtained, which translates to a stable gas channel and liquid curtain during laser forming resulting in a controlled atmosphere and efficient cooling. In other embodiments, the sidewall portions 45, 47 defining the particular outlet opening 34 and/or 38 can have a tapered or cup-like geometry. It should be noted that the nozzle itself could be constructed from virtually any material that has suitable mechanical properties. Preferably, the nozzle is fabricated from metals, such as copper, aluminum, and their alloys, ceramics, and the like. Other suitable material such as will be apparent to those skilled in the art in view of this disclosure.

In one embodiment, the distance from plate 35, i.e., a reference plane of the laser generating components, to the workpiece 12 (including a suitable standoff distance between the tip of the nozzles and the workpiece) is less than 10 millimeter (mm), an in other embodiments, the standoff distance is 3 to 5 mm. Preferably, the focal point of the laser is focused on the top surface of the workpiece.

The illustrated nozzle 30 is compact and sustains only a small volume of inert gas relative to prior art systems yet provides a controlled environment about the laser energy beam and incident region of the workpiece. The nozzle can be designed to be directly integrated with a laser head of the laser generating components, such as a Nd:YAG laser fiber coupler, a direct diode laser head, or the like. The laser head and the nozzle can be carried by the motion system to implement complex laser forming tasks with all the mentioned advantages. Due to the flexibility of this laser forming system, it can be used for large dimensioned structures, such as beams in a height, or complex structures such as 3D blades and tubes, or be used in media different from air, such as harsh gas, water, chemical solutions, etc.

Although the above noted Figures illustrate the laser energy beam oriented substantially perpendicular to the surface of the workpiece, it should be noted that the surface of the workpiece can be angled relative to the laser energy beam as may be desired for complex forming geometries.

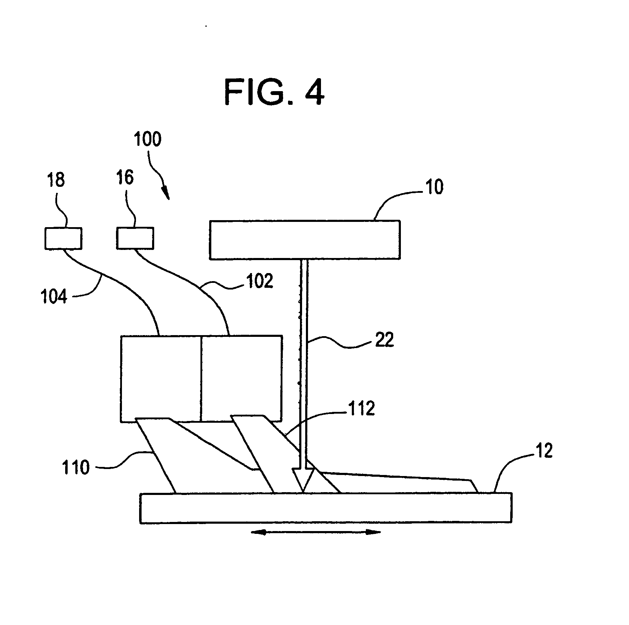

Figure 4 illustrates nozzle 100 in accordance with an example not covered by the claims suitable for use with the laser forming system 10. In this embodiment, the nozzle 100 is offset from the laser forming system 10. The nozzle 100 includes a first conduit 102 in fluid communication with the gas source 16 and a second conduit 104 in fluid communication with the liquid source 18. The outlet openings 106, 108 for discharging the respective fluid onto the workpiece project the respective fluid at an oblique angle relative to the direction of the laser energy beam 22. As used herein, the term "oblique" refers to an angle axis greater than 0 and less than 90 degrees relative to the direction of the laser energy beam. Optionally, two separate nozzles are employed for delivering the liquid and gas flows, wherein a selected one of the nozzles delivers the gas flow and the other nozzle delivers the liquid.

The nozzle 100 applies the gas and liquid flows onto the surface of the workpiece 12 such that the laser energy beam irradiates a "dry" region of the workpiece, wherein the dry region is formed by the gas flow so as to provide a gas channel 110 for the laser energy beam 22. Thus, contact of the laser energy beam 22 with the workpiece 12 is in a controlled atmosphere as defined by the gas or gases selected for the gas flow. As shown, a liquid curtain 110 is partially formed about the dried region blown out by the gas flow. Such a nozzle unit can be mounted in an offset fashion on the laser head or installed on a nearby structure. This design also realizes the active cooling, direct energy deposition, and/or gas protection.

For a complete laser forming system, one needs to integrate the laser and motion control system, path planning system, and on-site geometry measurement system. The laser forming system is convenient for such integration because the liquid and gas flows can be stopped easily and the workpiece can be moved to a different location and can be measured without interference from other devices, such as the glove box windows noted in the background section. It is also realized that the nozzle designs can be used for laser material processing applications other than laser forming. Such as laser surface treatment, laser machining, and the like.

Since the workpiece 12 is at all times locally bathed in the inert gas, it is protected from the elevated temperature of the workpiece due to laser heating thereof in which local thermal distortion of the workpiece is effected for in turn effecting the desired laser forming process.

Advantageously, the laser forming systems and active cooling processes disclosed herein provide integration of liquid cooling and gas protection so as to provide rapid cooling, thereby significantly reducing cycle times between laser scans. Moreover, the laser forming system is designed for direct energy deposition eliminating the need to compensate for laser spot size changes. The laser forming system is versatile and can be implemented for use for variety of target applications such as multidimensional plate forming, blade repair, and the like. The liquid and gas delivery jets can become an integrated part of the laser head and can be used on structures of a large dimension. In addition to the aforementioned advantages, depending on the gas selection, oxidation can be significantly minimized and/or eliminated.

This written description uses examples to disclose the invention, including the preferred mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims.

### PARTS LIST

- 10: thermal forming system
- 12: workpiece
- 14: nozzle
- 16: liquid source
- 18: gas source
- 20: gas channel
- 22: energy beam
- 24: liquid curtain
- 30: nozzle
- 32: annular member
- 34: outlet opening
- 35: plate
- 36: outer annular member
- 37: interior region
- 38: outlet opening
- 39: interior region
- 41: sidewall
- 43: sidewall
- 45: straight channel portion
- 47: straight channel portion
- 50: inlet opening
- 100: nozzle
- 102: first conduit
- 104: second conduit
- 106: outlet opening
- 108: outlet opening
- 110: gas channel
- 112: liquid curtain

## Claims

1. A thermal forming system (10), comprising:
a liquid source (16);
a gas source (18);
a thermal source (22) adapted to locally discharge thermal energy onto a workpiece (12); and
a nozzle (14, 30, 100) coupled to the thermal source (22), the nozzle comprising an inner annular member (32) and an outer annular member (36) defining first and second fluid passageways (37, 39), wherein the second fluid passageway (39) is concentric to the first fluid passageway (37), wherein the first fluid passageway (37) is in fluid communication with the gas source (18), wherein the second fluid passageway (39) is in fluid communication with the liquid source (16), and wherein the locally discharged thermal energy is coaxial with the first fluid passageway (37);
**characterized in that**:
each annular member (32, 36) is defined by sidewalls (41, 43) converging between a respective point of attachment of said gas source and said liquid source and a respective outlet opening (34, 38); and
each annular member (32, 36) further includes a straight channel portion (45, 47), respectively, extending from the converging sidewalls (41, 43) to define the respective outlet opening (34, 38) to provide a stable gas channel and liquid curtain during laser forming resulting in a controlled atmosphere and efficient cooling.

2. The thermal forming system of claim 1, further comprising a plate (35) optically transparent to the thermal energy provided by the thermal source (22).

3. The thermal forming system of any one of the preceding claims, wherein the gas source (18) comprises an inert gas.

4. The thermal forming system of any one of the preceding claims, wherein the liquid source (16) comprises water.

5. The thermal forming system of any one of the preceding claims, wherein the first fluid passageway (37) defines a gas channel (20, 110) and the second fluid passageway (39) defines a liquid curtain (24, 112) about the gas channel (20, 110) during fluid flow therethrough.

6. A process for forming a workpiece (12), the process comprising:
applying thermal energy locally to a surface of the workpiece (12); and
simultaneously discharging a gas and a liquid at the workpiece (12) to form a gas channel (20, 110) about the locally applied thermal energy and a liquid curtain (24, 112) about the gas channel (20, 110);
**characterized in that**:
said simultaneously discharging said gas and said liquid comprises allowing said fluid to flow from respective points of attachment of said gas source and said liquid source in converging channels defined by sidewalls (41, 43) of each annular member (32, 36) to a respective outlet opening (34, 38) through a respective straight channel portion (45, 47) extending from the converging sidewalls (41, 43) to define the respective outlet opening (34, 38) so as to provide a stable gas channel and liquid curtain during laser forming resulting in a controlled atmosphere and efficient cooling.

7. The process of Claim 6, wherein the gas is an inert gas and the liquid is water.

8. The process of any one of claims 6 and 7, wherein the gas channel (20) is coaxial with the thermal energy and the liquid curtain (24) forms a concentric ring about the gas channel.

## Patentansprüche

1. Thermisches Umformungssystem (10), aufweisend:
eine Flüssigkeitsquelle (16);
eine Gasquelle (18);
eine Wärmequelle (22), die dafür eingerichtet ist, lokal Wärmeenergie auf ein Werkstück (12) abzugeben; und
eine Düse (14), (30), (100), die mit der Wärmequelle (22) gekoppelt ist, wobei die Düse ein inneres ringförmiges Element (32) und ein äußeres ringförmiges Element (36) aufweist, die erste und zweite Fluiddurchtritte (37, 39) definieren, wobei der zweite Fluiddurchtritt (32) konzentrisch zu dem ersten Fluiddurchtritt (37) ist, wobei der erste Fluiddurchtritt (37) mit der Gasquelle (18) in Fluidverbindung steht, wobei der zweite Fluiddurchtritt (39) mit der Flüssigkeitsquelle (16) in Fluidverbindung steht, und wobei die lokal abgegebene Wärmeenergie koaxial zu dem ersten Fluiddurchtritt (37) ist;
**dadurch gekennzeichnet, dass**:
jedes ringförmige Element (32, 36) durch Seitenwände (41, 43) definiert ist, die zwischen einem entsprechenden Befestigungspunkt der Gasquelle und der Flüssigkeitsquelle und einer entsprechenden Auslassöffnung (34, 38) konvergieren; und
jedes ringförmige Element (32, 36) ferner jeweils einen geraden Kanalabschnitt (45, 47) enthält, der sich von den konvergierenden Seitenwänden (41, 43) zum Definieren der entsprechenden Auslassöffnung (34, 38) aus erstreckt, um einen stabilen Gaskanal und einen Flüssigkeitsvorhang während einer Laserumformung bereitzustellen, was zu einer kontrollierten Atmosphäre und effizienten Kühlung führt.

2. Thermisches Umformungssystem nach Anspruch 1, welches ferner eine Platte (35) aufweist, die für die durch die Wärmequelle (22) gelieferte Wärmeenergie optisch transparent ist.

3. Thermisches Umformungssystem nach einem der vorstehenden Ansprüche, wobei die Gasquelle (18) ein inertes Gas aufweist.

4. Thermisches Umformungssystem nach einem der vorstehenden Ansprüche, wobei die Flüssigkeitsquelle (16) Wasser aufweist.

5. Thermisches Umformungssystem nach einem der vorstehenden Ansprüche, wobei der erste Fluiddurchtritt (37) einen Gaskanal (20, 110) definiert und der zweite Fluid (39) einen Flüssigkeitsvorhang (24, 112) um den Gaskanal (20, 110) herum während des Fluiddurchflusses durch diesen definiert.

6. Verfahren zum Umformen eines Werkstückes (12), wobei das Verfahren die Schritte aufweist:
lokales Aufbringen von Wärmeenergie auf eine Oberfläche des Werkstückes (12); und
gleichzeitiges Ausgeben eines Gas und einer Flüssigkeit bei dem Werkstück (12), um einen Gaskanal (20, 110) um die lokal aufgebrachte Wärmeenergie herum und einem Flüssigkeitsvorhang (24, 112) um den Gaskanal (20, 110) herum zu erzeugen;
**dadurch gekennzeichnet, dass**:
das gleichzeitige Ausgeben des Gases und der Flüssigkeit dem Fluid ermöglicht, von entsprechenden Befestigungspunkten der Gasquelle und der Flüssigkeitsquelle in von den Seitenwänden (41, 43) des ringförmigen Elementes (32, 36) definierten Kanälen zu einer entsprechenden Auslassöffnung (34, 38) durch einen entsprechenden geraden Kanalabschnitt (45, 47), der sich von den konvergierenden Seitenwänden (41, 43) aus zum Definieren der entsprechende Auslassöffnung (34, 38) erstreckt, zu strömen, um somit einen stabilen Gaskanal und Flüssigkeitsvorhang während der Laserumformung bereitzustellen, was zu einer kontrollierten Atmosphäre und zu einer effizienten Kühlung führt.

7. Verfahren nach Anspruch 6, wobei das Gas ein inertes Gas und die Flüssigkeit Wasser ist.

8. Verfahren nach einem der Ansprüche 6 und 7, wobei der Gaskanal (20) koaxial zu der Wärmeenergie ist und der Flüssigkeitsvorhang (24) einen konzentrischen Ring um den Gaskanal herum bildet.

## Revendications

1. Système de formage thermique (10) comprenant :
une source de liquide (16) ;
une source de gaz (18) ;
une source thermique (22) adaptée pour décharger localement de l'énergie thermique sur une pièce (12) ; et
une buse (14, 30, 100) couplée à la source thermique (22), la buse comprenant un élément annulaire intérieur (32) et un élément annulaire extérieur (36) définissant des premier et deuxième passages de fluide (37, 39),où le deuxième passage de fluide (39) est concentrique avec le premier passage de fluide (37), où le premier passage de fluide (37) est en communication fluide avec la source de gaz (18), où le deuxième passage de fluide (39) est en communication fluide avec la source de liquide (16), et où l'énergie thermique déchargée localement est coaxiale avec le premier passage de fluide (37) ;
**caractérisé en ce que** :
chaque élément annulaire (32, 36) est défini par des parois latérales (41, 43) convergeant entre un point de fixation respectif de ladite source de gaz et ladite source de liquide et une ouverture de sortie respective (34, 38) ; et
chaque élément annulaire (32, 36) comprend en outre respectivement une partie de canal droite (45, 47) s'étendant depuis les parois latérales convergentes (41, 43) pour définir l'ouverture de sortie respective (34, 38) afin de fournir un canal de gaz stable et un rideau de liquide pendant la formation laser, ce qui donne une atmosphère maîtrisée et un refroidissement efficace.

2. Système de formage thermique selon la revendication 1, comprenant en outre une plaque (35) transparente optiquement relativement à l'énergie thermique fournie par la source thermique (22).

3. Système de formage thermique selon l'une quelconque des revendications précédentes, dans lequel la source de gaz (18) comprend un gaz inerte.

4. Système de formage thermique selon l'une quelconque des revendications précédentes, dans lequel la source de liquide (16) comprend de l'eau.

5. Système de formage thermique selon l'une quelconque des revendications précédentes, dans lequel le premier passage de fluide (37) définit un canal de gaz (20, 110) et le deuxième passage de fluide (39) définit un rideau de liquide (24, 112) autour du canal de gaz (20, 110) pendant l'écoulement de fluide à travers celui-ci.

6. Procédé de formage d'une pièce (12), le procédé comprenant les étapes consistant à :
appliquer localement de l'énergie thermique sur une surface de la pièce (12) ; et
décharger simultanément un gaz et un liquide au niveau de la pièce (12) pour former un canal de gaz (20, 110) autour de l'énergie thermique appliquée localement et un rideau de liquide (24, 112) autour du canal de gaz (20, 110) ;
**caractérisé en ce que** :
ledit déchargement simultané du gaz et du liquide comprend le fait de faire s'écouler ledit fluide depuis des points de fixation respectifs de ladite source de gaz et de ladite source de liquide en des canaux convergents définis par des parois latérales (41, 43) de chaque élément annulaire (32, 36) vers une ouverture de sortie respective (34, 38) à travers une partie de canal droite respective (45, 47) s'étendant depuis les parois latérales convergentes (41, 43) pour définir l'ouverture de sortie respective (34, 38) afin de fournir un canal de gaz stable et un rideau de liquide pendant la formation au laser, ce qui donne une atmosphère maîtrisée et un refroidissement efficace.

7. Procédé selon la revendication 6, dans lequel le gaz est un gaz inerte et le liquide est de l'eau.

8. Procédé selon la revendication 6 ou 7, dans lequel le canal de gaz (20) est coaxial avec l'énergie thermique et le rideau de liquide (24) forme un anneau concentrique autour du canal de gaz.
